# FASCICULE DE BREVET EUROPEEN

(11) **EP 3 515 760 B1**
(45) Date de publication et mention de la délivrance du brevet: **27.05.2020**
(21) Numéro de dépôt: 17780479.6
(22) Date de dépôt: 15.09.2017
(51) Int. Cl.: B60Q 1/14, B60Q 1/08, B60Q 11/00, B60Q 1/115

(54) **PROJECTEUR POUR VÉHICULE AUTOMOBILE À FONCTION DE CODE RELEVÉ**
SCHEINWERFER FÜR KRAFTFAHRZEUGE MIT ERHÖHTER ABBLENDLICHTFUNKTION
HEADLAMP FOR MOTOR VEHICLE WITH RAISED LOW-BEAM FUNCTION

(30) Priorité: 19.09.2016 FR 1658723
(43) Date de publication de la demande: 31.07.2019
(73) Titulaire: AML Systems, 75008 Paris (FR)
(72) Inventeur: MARC, Olivier, 75010 Paris (FR)
(74) Mandataire: Gevers & Orès
(86) Numéro de dépôt international: PCT/FR2017/052470
(87) Numéro de publication internationale: WO 2018/051033

(56) Documents cités:
- DE-A1-102004 034 838
- DE-A1-102005 061 094
- FR-A1- 2 813 829
- FR-A1- 2 822 425
- US-A1- 2005 225 266

## Description

Le domaine de la présente invention est celui des projecteurs de lumière et, plus particulièrement, celui des projecteurs pour véhicule automobile.

Les projecteurs de véhicule automobile comprennent, généralement, au moins une source de lumière apte à générer un faisceau lumineux et des moyens de contrôle de la forme du faisceau lumineux pour adapter celui-ci aux circonstances de la conduite.

Un projecteur peut comporter deux sources de lumière, à savoir :
- une première source de lumière qui est destinée à générer un premier faisceau lumineux correspondant à un feu de croisement, ce premier faisceau lumineux étant abaissé (c'est-à-dire pas relevé au maximum par rapport à la route) pour ne pas éblouir des conducteurs circulant en sens inverse (du véhicule équipé dudit projecteur), cette première source de lumière mettant en œuvre d'une fonction dite de code ; et
- une seconde source de lumière qui est destinée à générer un second faisceau lumineux correspondant à un feu de route, ce second faisceau lumineux étant relevé (par rapport au feu de croisement) pour bien éclairer la route, cette seconde source de lumière mettant en œuvre d'une fonction dite de route.

Généralement, le projecteur comprend, de plus, au moins un correcteur électrique de portée configuré pour agir sur un moyen de déplacement, afin d'amener le faisceau généré par une source de lumière dans une position nominale, par exemple dans une position dite de code pour la première source de lumière précitée. A cet effet, le correcteur de portée reçoit un signal de commande généré de façon usuelle par une unité de commande appropriée.

La règlementation interdit à un correcteur de portée de ce type, qui est destiné à une fonction de code, de déplacer le faisceau lumineux vers une position éblouissante.

Toutefois, en cas de défaillance du correcteur, ou en cas d'erreur ou de perte du signal de commande, le risque d'éblouissement est avéré.

Par ailleurs, les sources de lumière comprennent, de plus en plus souvent, des diodes électroluminescentes de type LED (« Light-Emitting Diode » en anglais). De telles diodes électroluminescentes sont très avantageuses, mais elles présentent une puissance réduite.

Le document DE 10 2005 061 094 A1 décrit un projecteur pouvant produire un faisceau de code et un faisceau de code relevé. Le faisceau de code relevé est rabaissé en cas de défaillance.

La présente invention a pour but de proposer un projecteur de lumière pour véhicule automobile, qui permet d'apporter une illumination supplémentaire et est particulièrement bien adapté à une source de lumière pourvue de diodes électroluminescentes, tout en évitant un éblouissement en cas de défaillance.

A cet effet, l'invention définit un projecteur pour véhicule automobile selon la revendication 1.

Ledit projecteur pour véhicule automobile, du type comportant au moins :
- une source de lumière configurée pour générer un faisceau lumineux ; et
- un moyen de déplacement apte à déplacer le faisceau lumineux et à l'amener au moins dans une position dite nominale,
est remarquable qu'il comporte de plus :
- un correcteur électrique apte à être commandé, ledit correcteur étant configuré pour agir sur le moyen de déplacement afin au moins de relever le faisceau lumineux généré par la source de lumière par rapport à la position nominale et l'amener dans une position dite relevée, le correcteur étant commandé en fonction d'un signal de commande électrique reçu ;
- un élément de détection mettant en œuvre une fonction de détection et configuré pour détecter au moins une perte dudit signal de commande (dans la position relevée) ; et
- un élément de commande mettant en œuvre une fonction de protection et configuré pour commander le correcteur afin qu'il amène le faisceau lumineux (de la position relevée) dans une position dite abaissée, qui est plus abaissée que la position relevée, en cas de détection d'une perte du signal de commande, sans pour autant modifier le comportement du correcteur en cas de court-circuit sur le signal de commande.

La position nominale du faisceau lumineux correspond à une fonction dite de code. De préférence, la position relevée du faisceau lumineux correspond à une position d'aide à une fonction dite de route, mettant en œuvre une fonction dite de code relevé.

Ainsi, grâce à l'invention, le faisceau lumineux peut être relevé à l'aide du correcteur et aider ainsi à l'illumination de la route, de préférence lorsque le projecteur doit générer un feu de route, en mettant en œuvre une fonction de code relevé. Cette fonction de code relevé apporte un éclairement supplémentaire à la fonction de route, à l'aide dudit faisceau lumineux utilisé nominalement pour la fonction de code.

De plus, grâce notamment aux éléments de détection et de commande, on est en mesure d'empêcher un problème d'éblouissement potentiel d'une telle fonction de code relevé en cas de défaillance (perte de signal de commande), en abaissant dans ce cas le faisceau lumineux dans une position abaissée empêchant un éblouissement de conducteurs en circulant en sens inverse, ce qui évite tout risque d'éblouissement lors d'une telle défaillance.

De plus, selon l'invention, tout en prévoyant cette sécurité, on ne modifie pas pour autant le comportement du correcteur en cas de court-circuit sur le signal de commande.

Pour ce faire, l'élément de détection est également configuré pour détecter un court-circuit sur le signal de commande, et l'élément de commande est également configuré pour commander le correcteur afin qu'il fige la position du faisceau lumineux à la position qu'il a au moment de la détection, en cas de détection d'un court-circuit sur le signal de commande, c'est-à-dire d'un débranchement ou d'une rupture du fil de commande (transmettant l'ordre de commande sous forme électrique) qui se met en contact d'une masse ou d'une alimentation électrique.

Le projecteur tel que décrit ci-dessus, est adapté à tout type de source de lumière. Toutefois, dans un mode de réalisation préféré, la source de lumière du projecteur comporte au moins une et de préférence une pluralité de diodes électroluminescentes. La présente invention permet notamment, dans ce cas, de pallier, par la position relevée, la puissance réduite des diodes électroluminescentes.

Dans le cadre de la présente invention, la fonction de détection mise en œuvre par l'élément de détection et la fonction de protection (ou de commande corrective) mise en œuvre par l'élément de commande peuvent être réalisées par logiciel (« software » en anglais), par exemple sous forme d'un programme de traitement de données et de génération de signaux de commande qui est intégré dans une carte électronique qui est, par exemple, montée dans le correcteur.

Toutefois, dans un mode de réalisation préféré de l'invention, ces fonctions sont réalisées par matériel (« hardware » en anglais).

A cet effet, de façon avantageuse, ledit correcteur comprend un élément de pilotage («IC Driver » en anglais) pourvu d'une entrée fonctionnelle sous faible impédance et d'une entrée de surveillance sous haute impédance, et il fait partie d'un circuit électrique comprenant, de plus, une résistance de leurrage agencée de manière à fournir sur l'entrée de surveillance une information amenant le correcteur à abaisser le faisceau lumineux à la position abaissée.

Avantageusement, la résistance de leurrage est agencée entre l'entrée du signal de commande dans le circuit électrique et un point de tension d'alimentation, de manière à agir sur l'entrée de surveillance sous haute impédance du correcteur électrique, connectée à l'entrée du signal de commande.

Par ailleurs, dans un mode de réalisation particulier, le projecteur est configuré pour recevoir ledit signal de commande électrique d'une unité de commande.

L'invention sera mieux comprise, et d'autres buts, détails, caractéristiques et avantages de celle-ci apparaîtront plus clairement au cours de la description explicative détaillée qui va suivre, de modes de réalisation de l'invention donnés à titre d'exemple purement illustratif et non limitatif, en référence aux dessins schématiques annexés. Sur ces dessins :
- la figure 1 est un schéma synoptique montrant les éléments principaux d'un mode de réalisation particulier d'un projecteur selon l'invention ; et
- la figure 2 est le schéma synoptique d'une partie d'un circuit électrique pourvu d'un correcteur de type matériel.

La présente invention s'applique à un projecteur de véhicule automobile, configuré pour générer un faisceau lumineux.

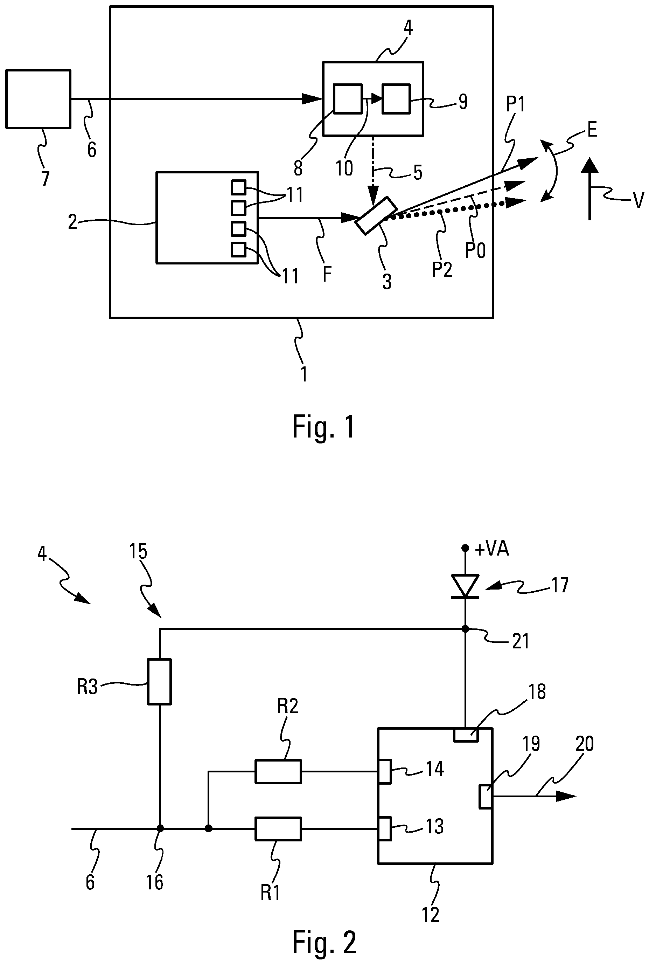

Comme représenté très schématiquement sur la figure 1, le projecteur 1 comporte au moins une source de lumière 2 qui est destinée à générer un faisceau lumineux F correspondant en premier lieu à un feu de croisement. Lorsqu'il est utilisé comme feu de croisement, le faisceau lumineux F n'est pas relevé au maximum par rapport à la route pour ne pas éblouir des conducteurs circulant en sens inverse, et il est amené dans une position P0 de fonctionnement usuelle, dite position nominale, dont la direction d'éclairement est illustrée par une flèche en tirets sur la figure 1. Dans ce cas, la source de lumière 2 met en œuvre, de façon usuelle, une fonction dite de code.

Pour ce faire, le projecteur 1 comporte un moyen de déplacement 3, par exemple de type optique, apte à déplacer le faisceau lumineux F notamment pour l'amener au moins dans ladite position nominale P0. Le moyen de déplacement 3 déplace le faisceau lumineux F en modifiant sa position angulaire, comme illustré par une double flèche E sur la figure 1, permettant de varier sa direction d'éclairement, vers le bas ou vers le haut, par rapport à la verticale illustrée par une flèche V.

Dans la présente description, les termes bas et haut sont définis par rapport à la direction verticale, dont le sens est montré par la flèche V.

Le projecteur 1 comporte, de plus, un correcteur 4 de portée, de type électrique. Ce correcteur 4 de coût réduit, est configuré pour agir de façon usuelle, comme illustré schématiquement par une liaison 5 en traits mixtes, sur le moyen de déplacement 3 (via un ordre de pilotage par exemple), afin au moins de pouvoir relever le faisceau lumineux F généré par la source de lumière 2 par rapport à la position nominale P0 et l'amener dans une position P1 dite position relevée.

A cet effet, le correcteur 4 est commandé en fonction d'un signal de commande électrique, reçu via une liaison électrique 6 d'une unité de commande 7. Cette unité de commande 7 est, par exemple, installée dans l'habitacle du véhicule équipé du projecteur 1 et est actionnable par le conducteur du véhicule.

La position nominale P0 du faisceau lumineux F correspond à une fonction dite de code, et la position relevée P1 du faisceau lumineux F correspond à une position d'aide à une fonction dite de route, pour laquelle est ainsi mise en œuvre une fonction dite de code relevé.

Par ailleurs, le projecteur 1 comporte de plus :
- un élément de détection 8 mettant en œuvre une fonction de détection et configuré pour détecter au moins une perte dudit signal de commande généré par l'unité de commande 7, lors de la mise en œuvre de la fonction de code relevé ; et
- un élément de commande 9 qui est, par exemple, relié à l'élément de détection 8 (comme illustré par une liaison10), qui met en œuvre une fonction de protection (ou de commande corrective), et qui est configuré pour commander le correcteur 4 afin qu'il amène le faisceau lumineux F (via le moyen de déplacement 3) dans une position P2 dite position abaissée, en cas de détection d'une perte du signal de commande par l'élément de commande 8 lors de la mise en œuvre de la fonction de code relevé. Cette position abaissée P2 est plus abaissée (verticalement) que la position relevée P1, c'est-à-dire que le faisceau lumineux est émis selon une direction qui est moins haute relativement à la verticale V, et elle est définie pour empêcher un éblouissement, notamment de conducteurs de véhicules circulant en sens inverse de celui du véhicule équipé dudit projecteur 1.

De plus, l'élément de commande 9 est configuré pour ne pas modifier le comportement du correcteur 4 en cas de court-circuit sur le signal de commande.

Ainsi, le faisceau lumineux F peut être relevé à l'aide du correcteur 4 (via le moyen de déplacement 3) et aider ainsi à l'illumination de la route, de préférence lorsque le projecteur doit générer un feu de route, en mettant en œuvre une fonction dite de code relevé. Cette fonction de code relevé apporte ainsi un éclairement supplémentaire au faisceau destiné à mettre en œuvre la fonction de route.

De plus, grâce notamment aux éléments de détection et de commande, on est en mesure d'empêcher un problème d'éblouissement potentiel d'une telle fonction de code relevé en cas de défaillance (perte de signal de commande), en abaissant dans ce cas le faisceau lumineux F pour l'amener à la position abaissée P2 (non éblouissante), ce qui évite tout risque d'éblouissement lors d'une telle défaillance.

Le projecteur 1 tel que décrit ci-dessus, permet ainsi de respecter la réglementation d'une fonction de code relevé sans créer de situation d'éblouissement.

De plus, tout en apportant cette sécurité, on prévoit de ne pas modifier pour autant le comportement du correcteur 4 en cas de court-circuit sur le signal de commande, dans un fonctionnement usuel (pour lequel la fonction de code relevé n'est pas activée).

Pour ce faire :
- l'élément de détection 8 est également configuré pour détecter un court-circuit sur le signal de commande ; et
- l'élément de commande 9 est configuré pour commander le correcteur 4 afin qu'il fige la position du faisceau lumineux F à la position qu'il a au moment de la détection (par l'élément de détection 8) d'un court-circuit sur le signal de commande hors position de code relevé. Un tel court-circuit correspond à un débranchement ou une rupture du fil (ou liaison de commande 6) qui transmet l'ordre de commande sous forme électrique. Dans ce cas, le fil va se mettre en contact avec une masse ou éventuellement avec une alimentation électrique (par exemple de 12V).

Par conséquent, le projecteur 1 est ainsi configuré pour mettre en œuvre les actions suivantes :
- rabattre le faisceau lumineux F à une position abaissée P2 en cas de perte du signal de commande ;
- figer le correcteur 4 en cas de court-circuit à un potentiel de OV sur le signal de commande (débranchement du fil de commande allant se mettre en contact avec une masse) ; et
- figer le correcteur 4 en cas de court-circuit à un potentiel de puissance sur le signal de commande (débranchement du fil de commande allant se mettre en contact avec une alimentation électrique (par exemple de 12V)).

Dans l'exemple de la figure 1, l'élément de détection 8 et l'élément de commande 9 sont intégrés dans le correcteur 4.

Le projecteur 1 tel que décrit ci-dessus, est adapté à tout type de source de lumière 2. Toutefois, dans un mode de réalisation préféré, la source de lumière 2 comporte au moins une et de préférence une pluralité de diodes électroluminescentes 11. La présente invention permet ainsi notamment de pallier, par la position relevée P1, la puissance réduite des diodes électroluminescentes 11.

Dans le cadre de la présente invention, la fonction de détection mise en œuvre par l'élément de détection 8 et la fonction de protection mise en œuvre par l'élément de commande 9 peuvent être réalisées par logiciel (« software » en anglais), par exemple sous forme d'un programme de traitement de données et de génération de signaux de commande. Un tel programme peut, par exemple, être intégré dans une carte électronique qui est montée dans le correcteur 4.

Toutefois, dans un mode de réalisation préféré de l'invention, ces fonctions sont réalisées par matériel (« hardware » en anglais).

Dans ce mode de réalisation préféré, représenté partiellement et schématiquement sur la figure 2, le correcteur électrique 4 comprend un élément de pilotage 12 pourvue d'une entrée fonctionnelle 13 sous faible impédance et d'une entrée de surveillance 14 sous haute impédance. L'entrée 13 est l'entrée fonctionnelle agissant sur la performance de base de l'ajusteur de direction. Cet élément de pilotage 12 fait partie d'un circuit électrique 15.

A titre d'illustration, l'élément de pilotage 12 («IC Driver » en anglais) peut être de type usuel TLE 4206-2G et il dispose de deux broches (deux fonctions) affectant le signal de commande :
- une broche (ou entrée) fonctionnelle 13 sous faible impédance ; et
- une broche (ou entrée) de surveillance 14 sous haute impédance

Le circuit de commande électrique 15 comporte, notamment, une résistance de référence R1 liée à l'entrée fonctionnelle 13 et une résistance R2 liée à l'entrée de surveillance 14.

De plus, sur la partie du circuit électrique 15 représentée sur la figure 2, on a également représenté :
- une entrée 16 du signal de commande, liée par exemple à la liaison 6 de la figure 1 ;
- une alimentation électrique, de tension VA, qui est liée, via une diode 17, à une entrée d'alimentation 18 de l'élément de pilotage 12 ; et
- une sortie 19 de l'élément de pilotage 12, la valeur (ordre de pilotage) disponible à la sortie 19 étant transmise via une liaison 20.

Le circuit électrique 15 comprend, de plus, une résistance de leurrage R3. Cette résistance de leurrage R3 est agencée de manière à fournir sur l'entrée de surveillance 14 une information amenant le correcteur 4 à abaisser le faisceau lumineux F à la position abaissée P2.

La résistance de leurrage R3 est agencée entre l'entrée 16 du signal de commande dans le circuit électrique 15 et un point 21 de tension d'alimentation, de manière à agir sur l'entrée de surveillance 14 sous haute impédance du correcteur électrique 4, qui est connectée à l'entrée 16 du signal de commande.

Un tel agencement de la résistance de leurrage R3 permet de modifier le comportement de la broche de surveillance 14 sans modifier le comportement de la broche fonctionnelle 13.

La valeur de la résistance de leurrage R3 est déterminée, de façon usuelle, de manière à :
- rabattre le faisceau à une position déterminée, en cas de perte du signal de commande ;
- figer le correcteur lors d'un court-circuit à un potentiel de OV sur le signal de commande, en cas de débranchement du fil de commande allant se mettre en contact avec une masse ;
- figer le correcteur lors d'un court-circuit à un potentiel de puissance sur le signal de commande, en cas de débranchement du fil de commande allant se mettre en contact avec une alimentation +VA (12V par exemple).

Le projecteur 1 et notamment le circuit électrique 15, tels que décrits ci-dessus, permettent ainsi, à partir d'un correcteur 4 comprenant un élément de pilotage 12 de type « Driver » réalisant le figeage du correcteur 4 en cas d'incident faisceau (perte du signal de commande, court-circuit du signal de commande avec une masse et ou une alimentation par exemple de12V) conformément à la réglementation, de faire fonctionner l'élément de pilotage 12 de manière à obtenir un rabattement du faisceau lumineux en cas de perte du signal de commande dans le cas du rajout d'une fonction de code relevé.

Plus précisément, les caractéristiques précitées et notamment l'ajout de la résistance de leurrage R3 permettent de modifier le circuit électrique 15 pour qu'il passe d'un premier mode de régulation usuel à un second mode de régulation conforme à l'invention. Le premier mode de régulation usuel consiste à ne pas générer de mouvement du moteur en cas d'incident sur le véhicule, tel que la perte du signal de commande, un court-circuit entre le signal de commande et la source de puissance et un court-circuit entre le signal de commande et la masse. Quant au deuxième mode de régulation conforme à l'invention, il consiste à abaisser le faisceau dans le cas d'une perte de signal de commande sans pour autant modifier le comportement (pas de levée de faisceau) en cas de court-circuit entre le signal de commande et la source de puissance et de court-circuit entre le signal de commande et la masse.

Le mode de réalisation préféré, décrit ci-dessus en référence à la figure 2, présente notamment les avantages suivants :
- il est de type uniquement matériel (résistance de leurrage R3, élément de pilotage 12, ...) ;
- il ne nécessite aucun logiciel pour sa mise en oeuvre ;
- il n'a aucun impact sur la fonctionnalité de base, car l'entrée fonctionnelle 13 est de faible impédance ; et
- il n'a pas d'impact sur d'autres points de régulation.

## Revendications

1. Projecteur pour véhicule automobile, ledit projecteur (1) comportant au moins :
- une source de lumière (2) configurée pour générer un faisceau lumineux (F) ;
- un moyen de déplacement (3) apte à déplacer le faisceau lumineux (F) et à l'amener au moins dans une position dite nominale (P0) pour générer un faisceau lumineux correspondant à une fonction de code ; et
- un correcteur (4) électrique apte à être commandé, ledit correcteur (4) étant configuré pour agir sur le moyen de déplacement (3) afin au moins de relever le faisceau lumineux (F) généré par la source de lumière (2) par rapport à la position nominale (P0) et l'amener dans une position de code relevé (P1), le correcteur (4) étant commandé en fonction d'un signal de commande électrique reçu,
**caractérisé en ce qu'**il comporte de plus :
- un élément de détection (8) mettant en œuvre une fonction de détection et configuré pour détecter au moins une perte dudit signal de commande ; et
- un élément de commande (9) mettant en œuvre une fonction de protection lors de la mise en oeuvre de la fonction de code relevé et configuré pour commander le correcteur (4) afin qu'il amène le faisceau lumineux (F) dans une position dite abaissée (P2), qui est plus abaissée que la position de code relevé (P1), en cas de détection d'une perte dudit signal de commande,
l'élément de détection (8) étant également configuré pour, lorsque la fonction de code relevé n'est pas activée, détecter un court-circuit sur ledit signal de commande et l'élément de commande (9) étant également configuré pour commander le correcteur (4) afin qu'il fige la position du faisceau lumineux (F) à la position qu'il a au moment de la détection, en cas de détection d'un court-circuit sur ledit signal de commande hors position de code relevé (P1).

2. Projecteur selon la revendication 1,
**caractérisé en ce que** la position relevée (P1) du faisceau lumineux (F) correspondant à une position d'aide à une fonction dite de route.

3. Projecteur selon l'une des revendications précédentes,
**caractérisé en ce que** la source de lumière (2) comporte au moins une diode électroluminescente (11).

4. Projecteur selon l'une quelconque des revendications précédentes, **caractérisé en ce que** ledit correcteur (4) comprend un élément de pilotage (12) pourvu d'une entrée fonctionnelle (13) sous faible impédance et d'une entrée de surveillance (14) sous haute impédance, et **en ce qu'**il fait partie d'un circuit électrique (15) comprenant, de plus, une résistance de leurrage (R3) agencée de manière à fournir sur l'entrée de surveillance (14) une information amenant le correcteur (4) à abaisser le faisceau lumineux à la position abaissée (P2).

5. Projecteur selon la revendication 4,
**caractérisé en ce que** la résistance de leurrage (R3) est agencée entre l'entrée (16) du signal de commande dans le circuit électrique (15) et un point de tension d'alimentation (21), de manière à agir sur l'entrée de surveillance (14) sous haute impédance du correcteur (4) électrique, connectée à l'entrée (16) du signal de commande.

6. Projecteur selon l'une quelconque des revendications précédentes,
**caractérisé en ce qu'**il est configuré pour recevoir ledit signal de commande électrique d'une unité de commande (7).

## Patentansprüche

1. Scheinwerfer für Kraftfahrzeuge, wobei der Scheinwerfer (1) mindestens Folgendes umfasst:
- eine Lichtquelle (2), die konfiguriert ist, um einen Lichtstrahl (F) zu erzeugen;
- ein Bewegungsmittel (3), das in der Lage ist, den Lichtstrahl (F) zu bewegen und ihn mindestens in eine als Nennposition (P0) bezeichnete Position zu bringen, um einen Lichtstrahl zu erzeugen, der einer Abblendfunktion entspricht; und
- einen steuerbaren elektrischen Korrektor (4), wobei der Korrektor (4) konfiguriert ist, um auf die Bewegungsmittel (3) einzuwirken, damit mindestens der von der Lichtquelle (2) erzeugte Lichtstrahl (F) in Bezug auf die Nennposition (P0) erhöht wird und dieser in eine erhöhte Abblendposition (P1) gebracht wird, wobei der Korrektor (4) in Abhängigkeit von einem empfangenen elektrischen Steuersignal gesteuert wird, **dadurch gekennzeichnet, dass** er weiter Folgendes umfasst:
- ein Detektionselement (8), das eine Detektionsfunktion ausführt und konfiguriert ist, um mindestens einen Verlust des Steuersignals zu detektieren; und
- ein Steuerelement (9), das eine Schutzfunktion während der Ausführung der erhöhten Abblendfunktion ausführt und konfiguriert ist, um den Korrektor (4) zu steuern, damit er den Lichtstrahl (F) in eine als abgesenkte Position (P2) bezeichnete Position bringt, die im Falle der Detektion eines Verlusts des Steuersignals weiter abgesenkt ist als die erhöhte Abblendposition (P1), wobei das Detektionselement (8) ebenfalls konfiguriert ist, um, wenn die erhöhte Abblendfunktion nicht aktiviert ist, einen Kurzschluss auf dem Steuersignal zu detektieren und das Steuerelement (9) ebenfalls konfiguriert ist, um den Korrektor (4) zu steuern, damit er die Position des Lichtstrahls (F) an der Position fixiert, die er zum Zeitpunkt der Detektion, im Falle der Detektion eines Kurzschlusses auf dem Steuersignal außerhalb der erhöhten Abblendposition (P1), einnimmt.

2. Scheinwerfer nach Anspruch 1,
**dadurch gekennzeichnet, dass** die erhöhte Position (P1) des Lichtstrahls (F) einer Position zur Unterstützung einer als Fahrfunktion bezeichneten Funktion entspricht.

3. Scheinwerfer nach einem der vorstehenden Ansprüche,
**dadurch gekennzeichnet, dass** die Lichtquelle (2) mindestens eine Leuchtdiode (11) umfasst.

4. Scheinwerfer nach einem der vorstehenden Ansprüche,
**dadurch gekennzeichnet, dass** der Korrektor (4) ein Lenkelement (12) umfasst, das mit einem Funktionseingang (13) mit niedriger Impedanz und einem Überwachungseingang (14) mit hoher Impedanz versehen ist, und dass er Teil einer elektrischen Schaltung (15) ist, die weiter einen Scheinwiderstand (R3) umfasst, der so angeordnet ist, dass er auf dem Überwachungseingang (14) eine Information liefert, die den Korrektor (4) veranlasst, den Lichtstrahl in die abgesenkte Position (P2) abzusenken.

5. Scheinwerfer nach Anspruch 4,
**dadurch gekennzeichnet, dass** der Scheinwiderstand (R3) zwischen dem Steuersignaleingang (16) in der elektrischen Schaltung (15) und einem Versorgungsspannungspunkt (21) so angeordnet ist, dass er auf den Überwachungseingang (14) mit hoher Impedanz des elektrischen Korrektors (4) wirkt, der mit dem Steuersignaleingang (16) verbunden ist.

6. Scheinwerfer nach einem der vorstehenden Ansprüche,
**dadurch gekennzeichnet, dass** er konfiguriert ist, um das elektrische Steuersignal von einer Steuereinheit (7) zu empfangen.

## Claims

1. Headlamp for a motor vehicle, said headlamp (1) comprising at least:
- one light source (2) configured to generate a light beam (F);
- a movement means (3) capable of moving the light beam (F) and to bring it at least into a so-called nominal position (P0) to generate a light beam corresponding to a low-;beam function and
- an electrical corrector (4) capable of being controlled, said corrector (4) being configured to act on the movement means (3) in order at least to raise the light beam (F) generated by the light source (2) relative to the nominal position (P0), and to bring it into a raised low-beam position (P1), the corrector (4) being controlled according to an electrical control signal received,
**characterised in that** it further comprises:
- a detection element (8) implementing a detection function and configured to detect at least one loss of said control signal; and
- a control element (9) implementing a protection function during the implementation of the raised low-beam function and configured to control the corrector (4) in order for it to bring the light beam (F) into a so-called lowered position (P2), which is lower than the raised low-beam position (P1), in case of detecting a loss of the control signal,
the detection element (8) being also configured to detect a short circuit on the control signal when the raised low-beam function is not activated, and the control element (9) being also configured to control the corrector (4) in order for it to freeze the position of the light beam (F) at the position that it has at the time of the detection, in case of detecting a short circuit on the control signal outside of the raised low-beam position.

2. Headlamp according to claim 1, **characterised in that** the raised position (P1) of the light beam (F) corresponds to a position for assisting with a so-called main beam function.

3. Headlamp according to one of the preceding claims, **characterised in that** the light source (2) comprises at least one light-emitting diode (11).

4. Headlamp according to any one of the preceding claims, **characterised in that** said corrector (4) comprises an IC driver element (12) provided with a functional input (13) under low impedance and a surveillance input (14) under high impedance, and **in that** it forms part of an electrical circuit (15) comprising, in addition, a decoy resistance (R3) arranged so as to provide on the surveillance input (14), an item of information bringing the corrector (4) to lower the light beam to the lowered position (P2).

5. Headlamp according to claim 4,
**characterised in that** the decoy resistance (R3) is arranged between the input (16) of the control signal in the electrical circuit (15) and a supply voltage point (21), so as to act on the surveillance input (14) under high impedance of the electrical corrector (4), connected to the input (16) of the control signal.

6. Headlamp according to any one of the preceding claims, **characterised in that** it is configured to receive said electrical control signal of a control unit (7).
